# EUROPÄISCHE PATENTSCHRIFT

(11) **EP 3 730 016 B1**
(45) Veröffentlichungstag und Bekanntmachung des Hinweises auf die Patenterteilung: **04.10.2023**
(21) Anmeldenummer: 20171017.5
(22) Anmeldetag: 23.04.2020
(51) Int. Cl.: A47K 3/28, A47K 10/10, A47K 17/02, F16B 7/04

(54) **PROFILSYSTEM**
PROFILE SYSTEM
SYSTÈME DE PROFILÉ

(30) Priorität: 24.04.2019 DE 202019102305 U; 16.05.2019 DE 202019102754 U
(43) Veröffentlichungstag der Anmeldung: 28.10.2020
(73) Patentinhaber: Schlüter-Systems KG, 58640 Iserlohn (DE)
(72) Erfinder: Schlüter, Werner, 58644 Iserlohn (DE)
(74) Vertreter: Schröter & Albrecht Patentanwälte PartG mbB

(56) Entgegenhaltungen:
- DE-B- 1 246 962
- US-A- 1 794 700
- US-A- 2 353 365

## Beschreibung

Die vorliegende Erfindung betrifft ein Profilsystem zum Befestigen von Gegenständen an einer mit einer Plattenbekleidung versehenen Raumwand, umfassend zumindest ein längliches, sich in einer Längsrichtung erstreckendes, einen konstanten Querschnitt aufweisendes Schienenprofil und zumindest ein Stecktelement, das dazu ausgelegt ist, unmittelbar und lösbar an dem Schienenprofil formschlüssig befestigt zu werden.

Profilsysteme der eingangs genannten Art sind im Stand der Technik in unterschiedlichsten Ausgestaltungen bekannt. Das Schienenprofil wird an einer Wand montiert, woraufhin das zumindest eine Steckelement lösbar an dem Schienenprofil unter Erzeugung eines Formschlusses befestigt werden kann. An dem oder den Steckelementen können unterschiedlichste Gegenstände montiert sein oder befestigt werden, wie Regalböden, Werkzeughalter oder dergleichen, um nur einige Beispiele zu nennen. Ein Problem bei bekannten Profilsystemen besteht häufig darin, dass das Schienenprofil mittels Schrauben an der Wand zu befestigen ist, was das Bohren von Löchern voraussetzt. Dies ist insbesondere dann nicht wünschenswert, wenn die Wand mit einer Plattenbekleidung versehen ist, beispielsweise in Form von Fliesen, da die Löcher im Falle einer Demontage nur schwer so verfüllt werden können, dass diese nicht mehr sichtbar sind. Handelt es sich bei der Wand um eine geflieste Duschwand, bei der zwischen Wand und Fliesen eine Flächenabdichtung angeordnet ist, so ist die Montage des Schienenprofils ohne Beschädigung der Flächenabdichtung gar nicht möglich. Ein weiterer Nachteil besteht darin, dass sich bei vielen Profilsystemen die Steckelemente im montierten Zustand abgesehen vom formschlüssigen Eingriff selbst meist nur punktuell oder linienförmig an dem Schienenprofil oder an der Wand abstützen. Entsprechend werden auf diese einwirkende Kräfte nur sehr lokal in die Wand eingeleitet. Dies führt dazu, dass die Traglast, die von dem Profilsystem aufgenommen werden kann, vergleichsweise gering ist. Entsprechend sind solche Profilsysteme nur beschränkt einsetzbar.

Ausgehend von diesem Stand der Technik ist es eine Aufgabe der vorliegenden Erfindung, ein Profilsystem der eingangs genannten Art mit verbessertem Aufbau zu schaffen.

Zur Lösung dieser Aufgabe schafft die vorliegende Erfindung ein Profilsystem der eingangs genannten Art, bei dem das Schienenprofil im Querschnitt betrachtet einen im Wesentlichen rechteckigen Basisabschnitt, dessen Tiefe an die Stärke der Plattenbekleidung angepasst ist und der an seiner Vorderseite mit einer sich in Längsrichtung erstreckenden Aufnahmenut mit einer von außen zugänglichen Nutöffnung versehen ist, sowie zumindest einen ersten Befestigungsschenkel aufweist, der sich im Wesentlichen bündig an die Rückseite des Basisabschnitts anschließt und auswärts von dem Basisabschnitt vorsteht, das Steckelement einen insbesondere plattenförmig ausgebildeten Halteabschnitt und einen an diesem befestigten, länglich ausgebildeten und sich in Längsrichtung erstreckenden Verbindungsabschnitt aufweist, wobei der Verbindungsabschnitt zumindest einen sich auswärts von dem Halteabschnitt erstreckenden Steg und einen am freien Ende des Stegs angeordneten Kopfabschnitt umfasst, der derart ausgebildet ist, dass er sich in einer ersten Schwenkposition des Steckelementes bezüglich einer sich in Längsrichtung erstreckenden Schwenkachse durch die Nutöffnung in die Aufnahmenut des Schienenprofils einstecken und durch Schwenken des Steckelementes um die Schwenkachse in eine zweite Schwenkstellung innerhalb der Aufnahmenut arretieren lässt, und das Profilsystem zumindest ein Lastaufnahmeelement aufweist, das an seiner im Wesentlichen eben ausgebildeten Rückseite mit einer nach unten offenen und nach oben geschlossenen, seitlich Hinterschneidungen aufweisenden Nut versehen, deren Abmessungen derart an den Halteabschnitt des Steckelementes angepasst sind, dass das Lastaufnahmeelement von oben formschlüssig auf den arretierten Halteabschnitt aufschiebbar ist und in diesem Zustand flächig an der Plattenbekleidung anliegt, und an dessen Vorderseite ein Badutensil befestigt ist. Die Ausbildung des Schienenprofils ist dahingehend von Vorteil, dass sich dieses beim Fliesen einer Wand in den Fliesenbelag integrieren lässt, indem der zumindest eine Befestigungsschenkel in den zum Verlegen der Plattenbekleidung verwendeten Fliesenkleber bzw. Dünnbettmörtel eingebettet wird. Entsprechend sind zum Befestigen des Schienenprofils keine Schrauben erforderlich, weshalb dessen Montage eine vorhandene Flächenabdichtung nicht beeinträchtigt. Zudem wird auch die Oberseite des zumindest einen Befestigungsschenkels von Fliesenkleber und der Flächenbekleidung bedeckt, wodurch eine sehr stabile Anordnung realisiert wird. Im Übrigen wird ein sehr ordentliches Erscheinungsbild erzielt. Das Vorsehen eines auf den Halteabschnitt des Steckelementes aufschiebbaren oder aufsteckbaren Lastaufnahmeelements ist zum einen dahingehend vorteilhaft, dass das Steckelement durch das an diesem gehaltene Lastaufnahmeelement in seiner zweiten Stellung fixiert wird, so dass es sich nicht versehentlich lösen kann. Zum anderen wird die Last über das flächig an der Wand anliegende Lastaufnahmeelement sehr gut in die Wand eingeleitet. Entsprechend können von dem erfindungsgemäßen Profilsystem sehr hohe Lasten aufgenommen werden.

Bevorzugt beschreibt die Aufnahmenut im Querschnitt betrachtet einen sich über zumindest 200° erstreckenden Kreisbogen mit einem ersten Radius R1, wobei die Nutöffnung eine vorbestimmten Nutbreite besitzt, und wobei der Kopfabschnitt eine im Wesentlichen zylindrische Mantelfläche aufweist, die im Querschnitt betrachtet einen Kreisbogen mit dem Radius R2 beschreibt, der gleich dem Radius R1 oder geringfügig kleiner als dieser ist, wobei der maximale Abstand zwischen einer den Kreisbogen der Mantelfläche begrenzenden Kreissehne und der Mantelfläche geringfügig kleiner als die Nutbreite (B) ist. Dank einer solchen Ausgestaltung lässt sich das Steckelement einfach in die Aufnahmenut des Schienenprofil einführen und im Rahmen einer Schwenkbewegung an diesem formschlüssig befestigen.

Vorteilhaft sind an der Rückseite und/oder an der Oberseite und/oder an der Unterseite des Basisabschnitts des Schienenprofils hinterschnittene Aussparungen vorgesehen. In solchen Aussparungen kann sich ein Kleber oder Mörtel verkrallen, mit dem das Schienenprofil an einer Wand befestigt wird.

Gemäß einer Ausgestaltung der vorliegenden Erfindung ist im Eckbereich zwischen der Unterseite und der Vorderseite des Basisabschnitts und/oder im Eckbereich zwischen der Vorderseite und der Oberseite des Basisabschnitts und/oder im Eckbereich zwischen der Oberseite und der Rückseite des Basisabschnitts eine Ausnehmung vorgesehen, die eine Fugenmörtelkammer zur Aufnahme von Fugenmörtel definiert. Vorteilhaft ist die Ausnehmung mit einem Hinterschnitt versehen, der derart positioniert und ausgebildet ist, dass sich ein in die Ausnehmung eingebrachter Fugenmörtel darin verkrallen kann.

Der Befestigungsschenkel kann erfindungsgemäß mit einer Vielzahl von Durchgangsöffnungen versehen ist, die in Längsrichtung bevorzugt gleichmäßig voneinander beabstandet sind. Durch solche Durchgangsöffnungen kann ein Kleber oder Mörtel hindurchtreten, mit dem das Schienenprofil an einer Wand befestigt wird, wodurch ein sicherer Halt gewährleistet wird.

Bevorzugt sind das Schienenprofil und das zumindest eine Steckelement aus Metall hergestellt sind, insbesondere aus Aluminium oder Edelstahl, wodurch eine sehr gute Festigkeit und Korrosionsbeständigkeit erzielt werden.

Der Halteabschnitt des Steckelementes ist vorteilhaft plattenförmig ausgebildet. An einem solchen plattenförmigen Halteabschnitt lassen sich viele verschiedene Gegenstände befestigen, so dass das Steckelement flexibel einsetzbar ist.

Der Steg des Verbindungsabschnitts steht bevorzugt in einem Winkel im Bereich zwischen 100° und 110° insbesondere aufwärts von dem Halteabschnitt vor. Ein derart geneigter Verbindungsabschnitt erleichtert das Einsetzen des Kopfabschnittes in die Aufnahmenut.

Gemäß einer Ausgestaltung der vorliegenden Erfindung ist der Kopfabschnitt mit einer sich in Längsrichtung erstreckenden Aufnahmevertiefung versehen, in welcher eine dem Toleranzausgleich dienende Gummilippe eingesetzt ist. Mit einer solchen Gummilippe können Abweichungen zwischen den Radien R1 und R2 ausgeglichen werden, um einen guten Sitz des Kopfabschnittes in der Aufnahmenut sicherzustellen.

Bevorzugt ist das zumindest eine Lastaufnahmeelement aus Metall oder Kunststoff hergestellt.

Bei dem Badutensil kann es sich erfindungsgemäß um hoch beanspruchte Utensilien handeln, wie beispielsweise um eine Haltestange, wie sie im Bereich von Duschen, Badewannen und Toiletten als Personenstütze angeordnet wird, oder um einen Duschsitz. Ebenso kann es sich aber natürlich auch um weniger beanspruchte Utensilien handeln, wie beispielsweise um eine Duschablage, einen Handtuchhalter oder dergleichen.

Weitere Merkmale und Vorteile der vorliegenden Erfindung werden anhand der nachfolgenden Beschreibung unter Bezugnahme auf die beiliegende Zeichnung deutlich. Darin ist/sind
Figur 1 eine perspektivische Ansicht eines Schienenprofils eines Profilsystems gemäß einer Ausführungsform der vorliegenden Erfindung;
Figur 2 eine vergrößerte Ansicht des Ausschnitts II in Figur 1;
Figur 3 eine perspektivische Ansicht des an einer Wand montierten Schienenprofils;
Figur 4 eine perspektivische Ansicht eines Steckelementes des Profilsystems;
Figur 5 eine vergrößerte Ansicht des Ausschnitts IV in Figur 4;
Figuren 6-8 vergrößerte Schnittansichten, die zeigen, wie das Steckelement an dem Schienenprofil der in Figur 3 dargestellten Anordnung befestigt wird;
Figur 9 eine perspektivische Ansicht analog zu Figur 3 mit an dem Schienenprofil befestigtem Steckelement;
Figur 10 eine perspektivische Vorderansicht eines Lastaufnahmeelements des Profilsystems;
Figur 11 eine perspektivische Rückansicht des Lastaufnahmeelements;
Figuren 12-14 perspektivische Ansichten analog zu Figur 11, die zeigen, wie ein Lastaufnahmeelement an dem Steckelement befestigt wird;
Figur 15 eine perspektivische Ansicht eines an einer Wand befestigten Badutensils in Form einer Haltestange;
Figur 16 eine teilweise geschnittene vergößerte Seitenansicht der in Figur 15 dargestellten Anordnung;
Figur 17 eine perspektivische Ansicht eines an einer Wand befestigten Badutensils in Form einer Duschablage;
Figur 18 eine teilweise geschnittene vergößerte Seitenansicht der in Figur 17 dargestellten Anordnung;
Figur 19 eine perspektivische Ansicht eines an einer Wand befestigten Badutensils in Form eines Duschsitzes im aufgeklappten Zustand;
Figur 20 eine teilweise geschnittene vergößerte Seitenansicht der in Figur 19 dargestellten Anordnung; und
Figur 21 eine perspektivische Ansicht des in Figur 19 daregstellten Duschsitzes im eingeklappten Zustand.

Gleiche Bezugsziffern bezeichnen nachfolgend gleichartig ausgebildete Bauteile bzw. Bauteilbereiche.

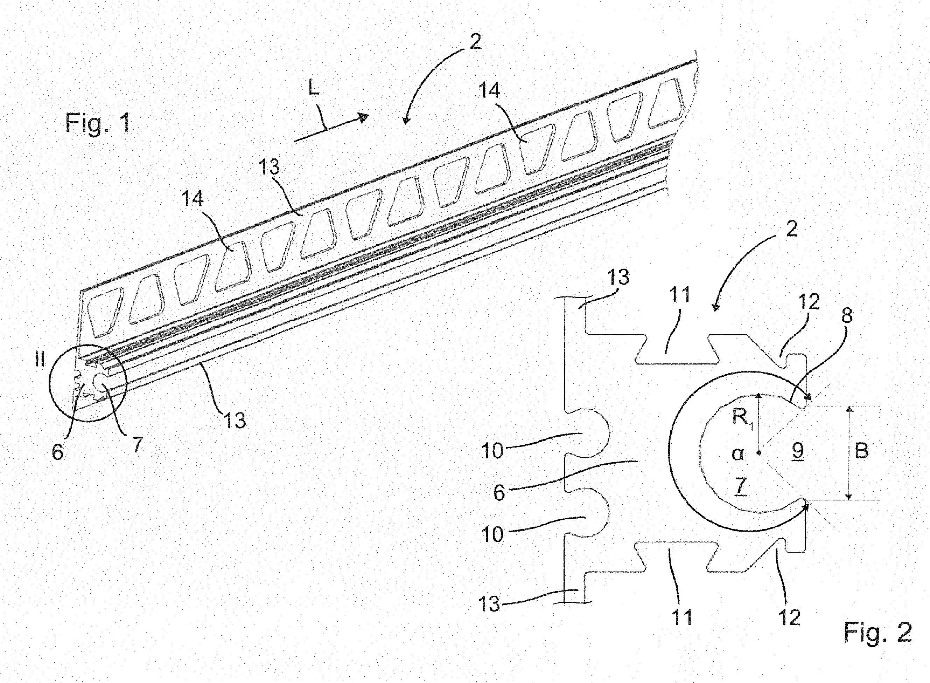

Die Figuren 1 bis 16 zeigen ein Profilsystem 1 gemäß einer ersten Ausführungsform der vorliegenden Erfindung, das als Hauptkomponenten ein Schienenprofil 2, ein Steckelement 3, ein Lastaufnahmeelement 4 und ein Badutensil 5 in Form einer Haltestange aufweist.

Bei dem Schienenprofil 2 handelt es sich um ein längliches, sich in einer Längsrichtung L erstreckendes und einen konstanten Querschnitt aufweisendes Schienenprofil, das vorliegend aus Edelstahl hergestellt ist. Alternativ kann das Schienenprofil 2 aber auch aus Aluminium oder einem anderen Werkstoff bestehen, wie beispielsweise Kunststoff. Die Länge des Schienenprofils 2 beträgt im Auslieferungszustand normalerweise 1000 bis 3000 mm und kann dann vor der Montage auf eine beliebige Länge gekürzt werden. Das Schienenprofil 2 umfasst im Querschnitt betrachtet einen im Wesentlichen rechteckigen Basisabschnitt 6, der an seiner Vorderseite mit einer sich in Längsrichtung L erstreckenden Aufnahmenut 7 versehen ist. Die Aufnahmenut 7 beschreibt einen sich über einen Winkel von zumindest 200°, vorliegend etwa 270° erstreckenden Kreisbogen 8 mit einem ersten Radius R1 und ist über eine Nutöffnung 9 mit einer vorbestimmten Nutbreite B zugänglich. An der Rückseite, Oberseite und Unterseite des Basisabschnitts 6 sind hinterschnittene Aussparungen 10, 11 vorgesehen. Die an der Rückseite vorgesehenen beiden Aussparungen 10 weisen im Querschnitt betrachtet die Form eines Teilkreises auf. Die Aussparungen 11 an der Oberseite und an der Unterseite des Basisabschnitts 6 weisen eine Schwalbenschwanzform auf. In den Eckbereichen zwischen der Unterseite und der Vorderseite sowie zwischen der Vorderseite und der Oberseite des Basisabschnitts 6 sind ebenfalls mit einem Hinterschnitt versehene Ausnehmungen 12 vorgesehen, die eine Fugenmörtelkammer definieren. Das Schienenprofil 2 umfasst ferner zwei Befestigungsschenkel 13, die sich im Wesentlichen bündig an die Rückseite des Basisabschnitts 6 anschließen und in entgegengesetzten Richtungen auswärts von dem Basisabschnitt 6 nach oben und unten vorstehen. Jeder der Befestigungsschenkel 13 ist mit einer Vielzahl von Durchgangsöffnungen 14 versehen, die in Längsrichtung L im Wesentlichen gleichmäßig voneinander beabstandet sind, wobei der gleichmäßige Abstand nicht obligatorisch ist.

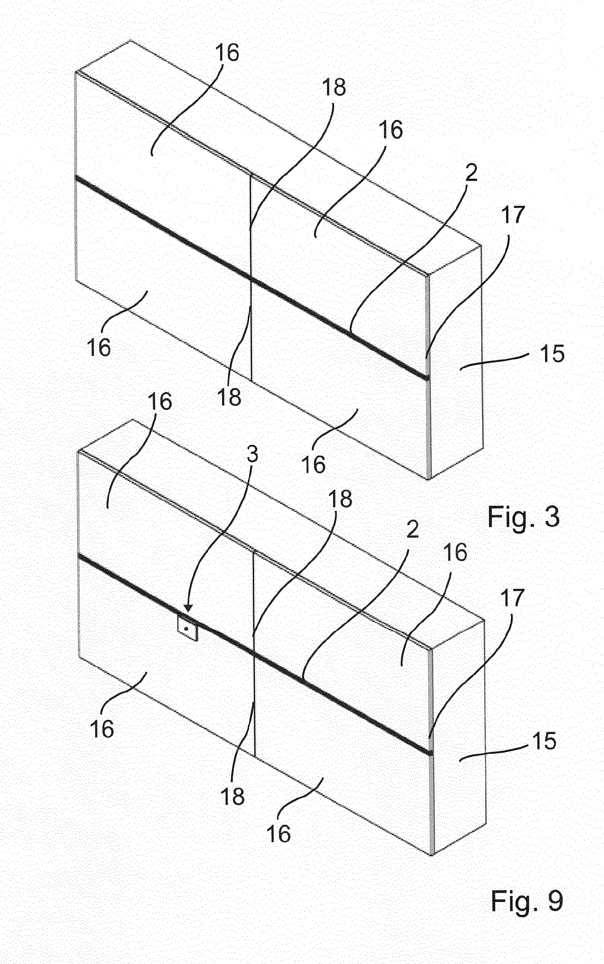

Figur 3 zeigt das Schienenprofil 2 im an einer Wand 15 montierten Zustand. Zur Herstellung dieses Zustands wird das Schienenprofil 2 während des Verlegens von Fliesen 16 an einer Wand 15 in eine horizontalen Fuge zwischen zwei übereinander angeordneten Fliesenreihen derart eingebaut, dass die Befestigungsschenkel 13 im Fliesenkleber 17 eingebettet werden und der Basisabschnitt 6 in der Fuge derart positioniert wird, dass die Seitenkanten der Fliesen 16 an der Unterseite und der Oberseite des Basisabschnitts 6 anliegen. Der Fliesenkleber 17 durchdringt dabei die Durchgangsöffnungen 14 des oberen Befestigungsschenkels 13 und verankert sich in den Aussparungen 10 und 11, wodurch eine gute Befestigung des Schienenprofils 2 an der Wand 15 erzielt wird. In einem weiteren Schritt wird Fugenmörtel 18 aufgetragen und verklammert sich in den Ausnehmungen 12 des Basisabschnitts 6 des Schienenprofils 2.

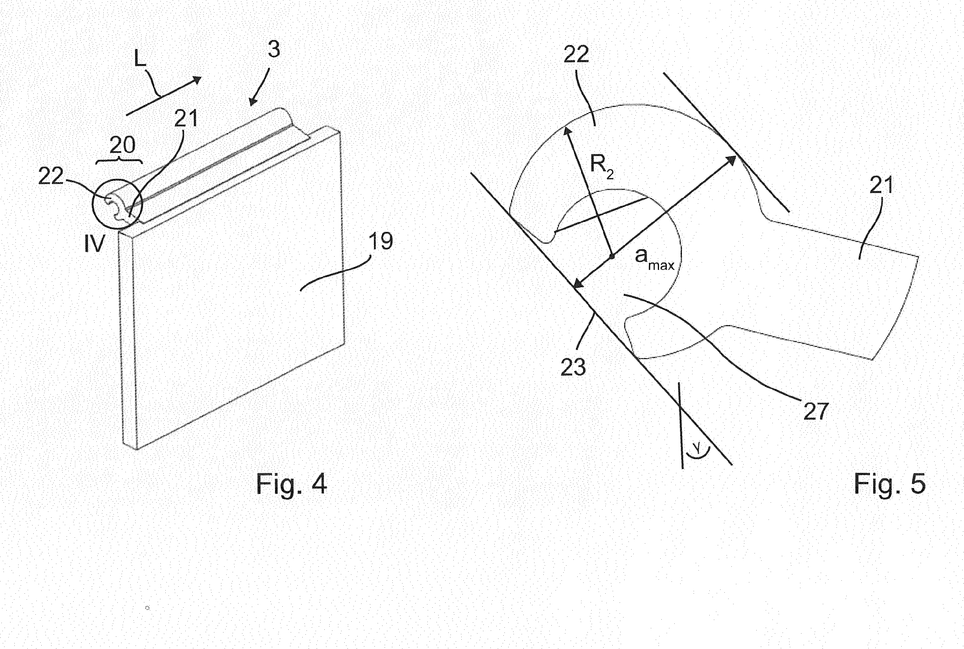

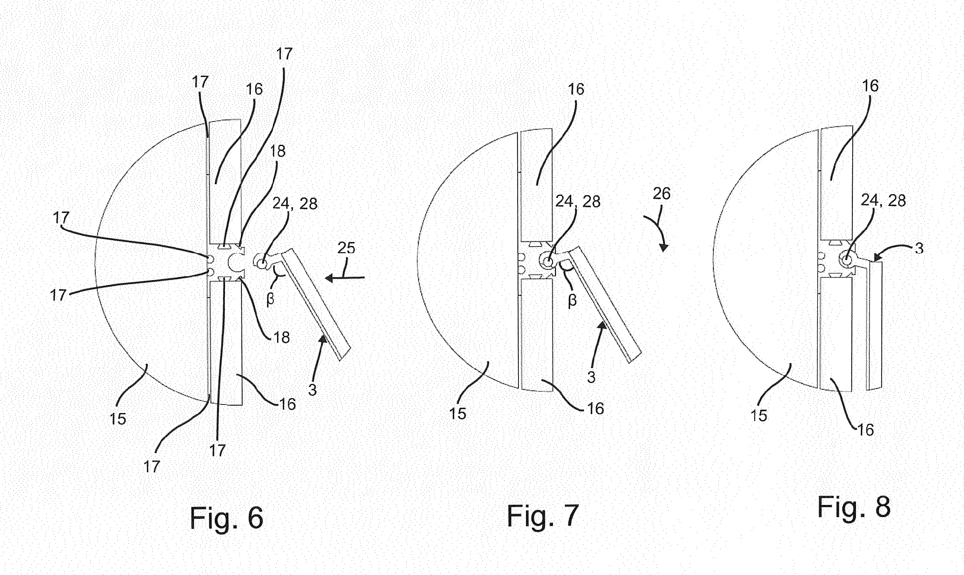

Das Steckelement 3, das in den Figuren 4 und 5 detaillierter dargestellt ist, ist vorliegend ebenfalls aus Edelstahl hergestellt. Ebenso wie beim Schienenprofil 2 können aber auch andere Materialien eingesetzt werden. Das Steckelement 3 umfasst einen vorliegend plattenförmig ausgebildeten Halteabschnitt 19 und einen an diesem befestigten, länglich ausgebildeten und sich in Längsrichtung L erstreckenden Verbindungsabschnitt 20. Der Verbindungsabschnitt 20 weist einen sich auswärts von dem Halteabschnitt 19 erstreckenden Steg 21 und einen am freien Ende des Stegs 21 angeordneten, zylinderartig ausgebildeten Kopfabschnitt 22 auf, dessen Mantelfläche im Querschnitt betrachtet einen Kreisbogen mit dem Radius R2 beschreibt, der gleich dem Radius R1 oder geringfügig bzw. wenige Zehntel Millimeter kleiner als dieser ist. Der maximale Abstand aₘₐₓ zwischen einer den Kreisbogen begrenzenden Kreissehne 23, die sich bezogen auf Figur 4 vorliegend in einem Winkel γ zum Halteabschnitt 19 erstreckt, der bevorzugt im Bereich von 35° bis 60° liegt, und der Mantelfläche ist geringfügig kleiner als die Nutbreite B, so dass sich der Kopfabschnitt 22, wie es in Figur 6 gezeigt ist, in einer bestimmten Schwenkposition des Haltelementes 3 bezüglich einer sich in Längsrichtung L erstreckenden Schwenkachse 24 durch die Nutöffnung 9 in die Aufnahmenut 7 des Schienenprofils 2 in Richtung des Pfeils 25 einführen und im Rahmen einer Schwenkbewegung um die Schwenkachse 24 in Richtung des Pfeils 26 innerhalb der Aufnahmenut 7 arretieren lässt, siehe hierzu die Figuren 7 und 8. Zur Erleichterung des Einführens des Kopfabschnitts 22 in die Aufnahmenut 7 steht der Steg 21 des Verbindungsabschnitts 20 in einem Winkel β von 100° bis 110° von dem Halteabschnitt 19 vor. Zur Erzielung eines Toleranzausgleiches im in Figur 8 dargestellten Zustand ist der Kopfabschnitt 22 im Bereich der Kreissehne 23 mit einer sich in Längsrichtung L erstreckenden Aufnahmevertiefung 27 versehen, in die eine längliche Gummilippe 28 eingesetzt ist. Diese Gummilippe 28 verhindert, dass sich der Kopfabschnitt 22 innerhalb der Aufnahmenut 7 zu leicht bewegen lässt. Figur 9 zeigt das Steckelement 3 in demjenigen Zustand, in dem es an dem Schienenprofil 2 der in Figur 3 dargestellten Anordnung befestigt ist.

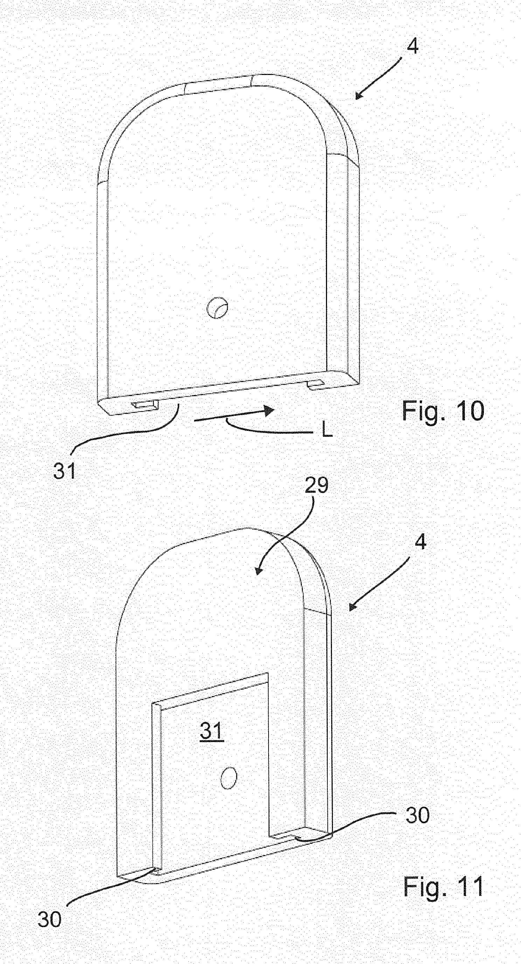

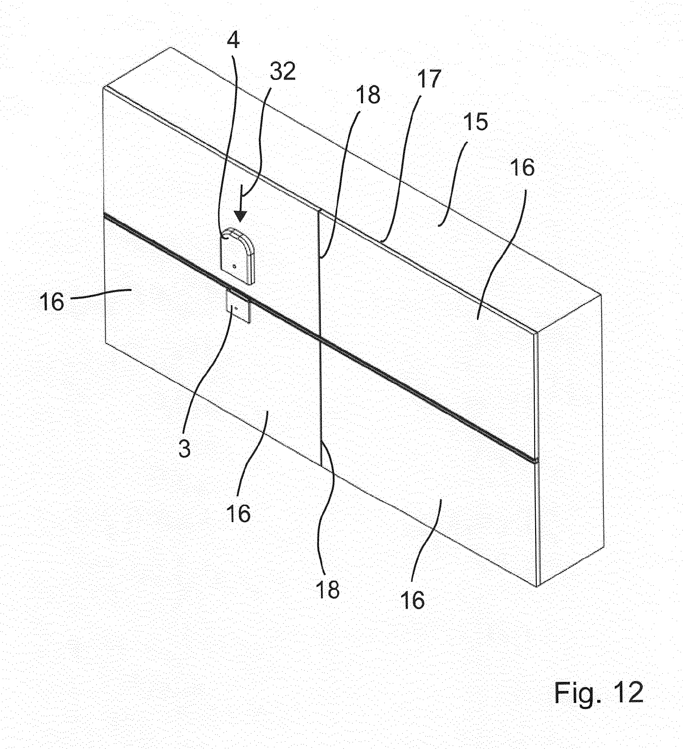

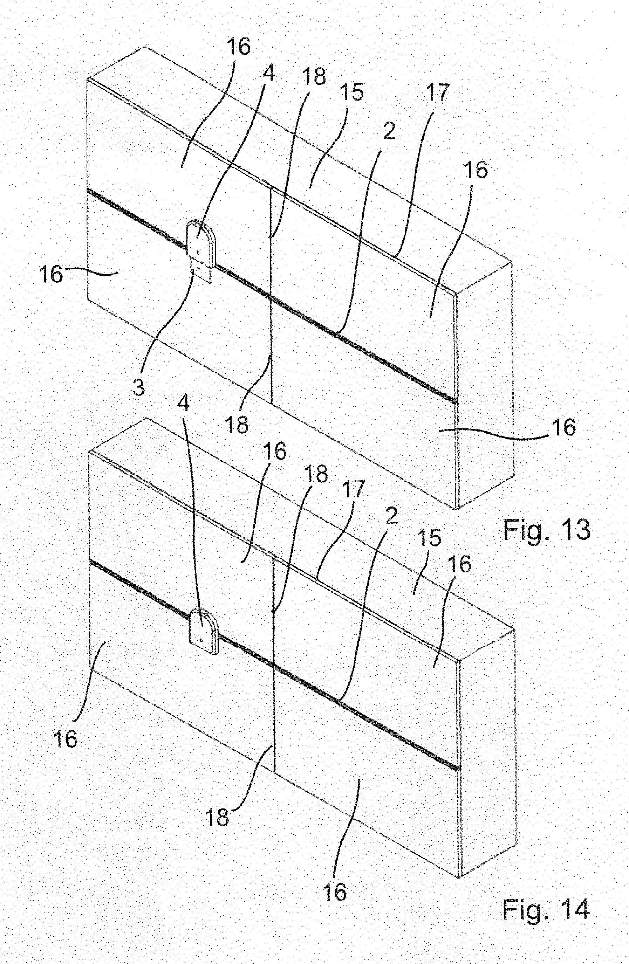

Die Figuren 10 und 11 zeigen das Lastaufnahmeelement 4. Dieses ist vorliegend plattenartig ausgebildet und an seiner im Wesentlichen eben ausgebildeten Rückseite 29 mit einer nach unten offenen und nach oben geschlossenen, seitlich Hinterschneidungen 30 aufweisenden Nut 31 versehen, deren Abmessungen derart an den Halteabschnitt 19 des Steckelementes 3 angepasst sind, dass das Lastaufnahmeelement 4 ausgehend von dem in Figur 12 dargestellten Zustand von oben in Richtung des Pfeils 32 formschlüssig auf den arretierten Halteabschnitt 19 aufschiebbar ist, wie es in den Figuren 13 und 14 gezeigt ist, und in diesem aufgeschobenen Zustand flächig an den Fliesen 16 anliegt.

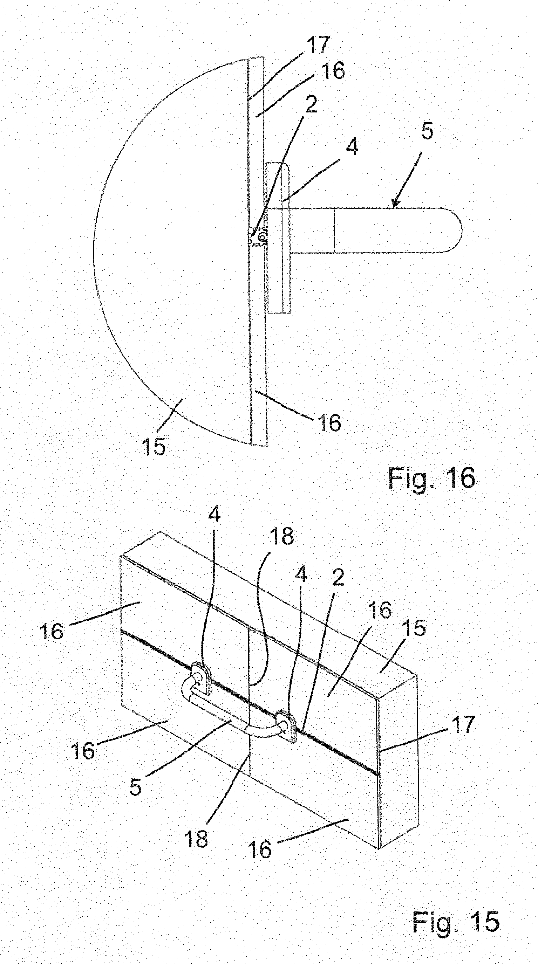

Die Figuren 15 und 16 zeigen eine Anordnung, bei der ein Badutensil 5 in Form einer Haltestange unter Verwendung von zwei Steckelementen und zwei Lastaufnahmeelementen 4 an einer Wand 15 befestigt ist, wobei das Badutensil 5 fest mit den beiden Lastaufnahmeelementen 4 verbunden ist.

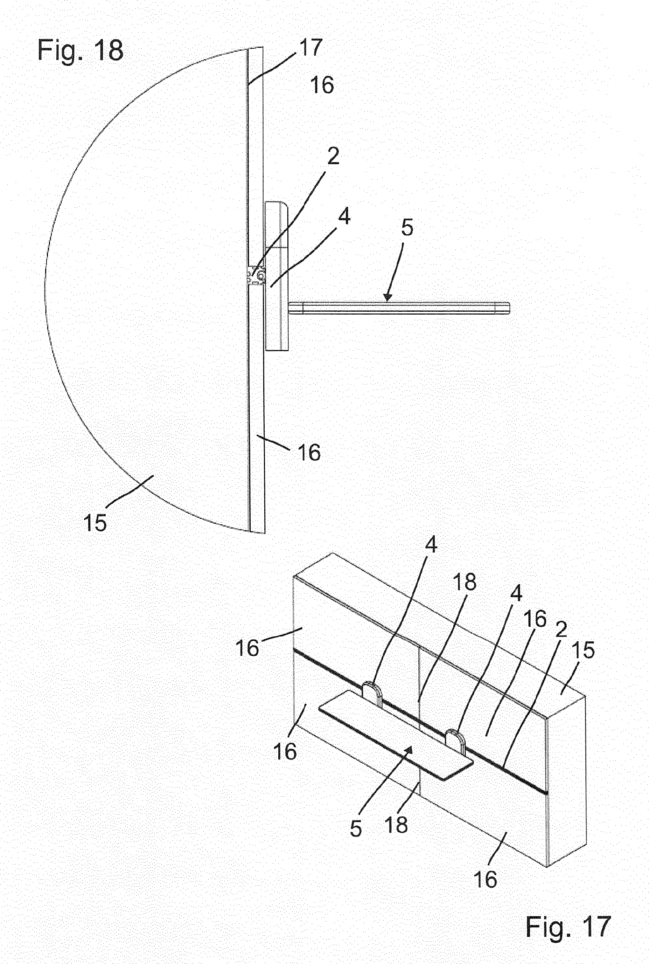

Die Figuren 17 und 18 zeigen eine Variante, bei der das Badutensil 5 durch eine Duschablage gebildet ist.

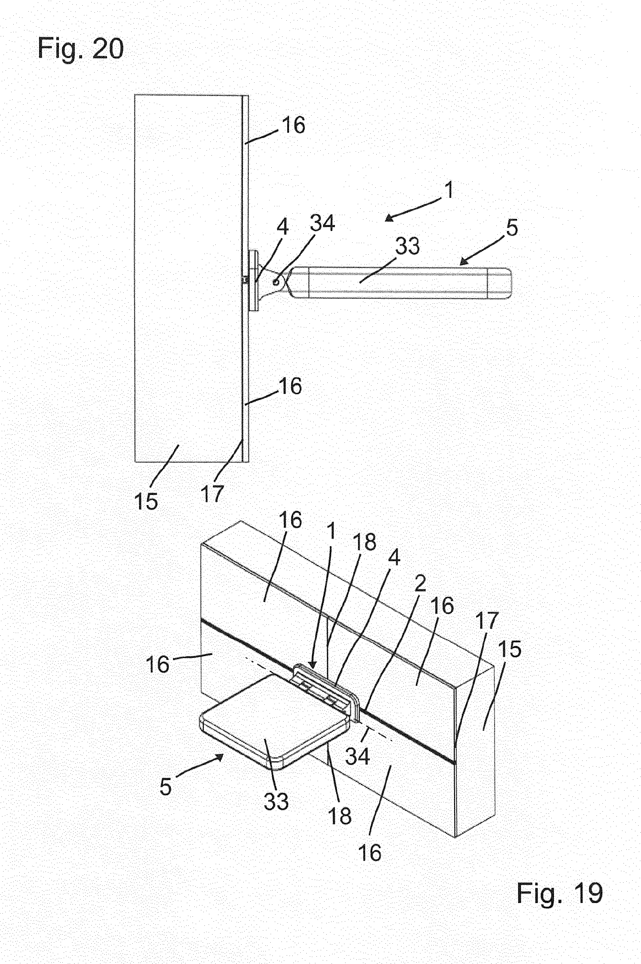

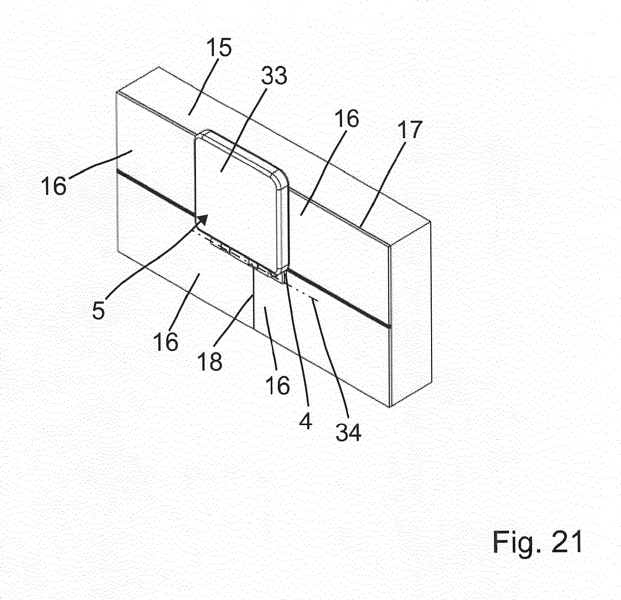

Bei der in den Figuren 19 bis 21 dargestellten Variante handelt es sich bei dem Badutensil 5 um einen Duschsitz. Der Duschsitz umfasst ein Sitzteil 33, das an einem Lastaufnahmeelement 4 schwenkbar um eine Schwenkachse 34 befestigt ist, so dass das Sitzteil 34 aus der in den Figuren 19 und 20 gezeigten horizontalen Position aufwärts in die in Figur 21 gezeigte vertikale Position geschwenkt werden kann, wenn es nicht gebraucht wird. Das Lastaufnahmeelement 4 weist bei dieser Ausführungsform, auch wenn dies vorliegend nicht dargestellt ist, zwei Nuten 31 auf und ist von oben auf die Halteabschnitte 19 zweier an dem Schienenprofil 2 befestigter Steckelemente 3 aufgeschoben.

Es sollte klar sein, dass die zuvor beschriebenen Ausführungsformen lediglich als Beispiel und in keiner Weise als einschränkend aufgefasst werden sollten. Vielmehr sind bezogen auf die Ausführungsformen Änderungen und Modifikationen möglich, ohne den durch die beiliegenden Ansprüche definierten Schutzbereich zu verlassen.

### Bezugszeichenliste

1 Profilsystem
2 Schienenprofil
3 Steckelement
4 Lastaufnahmeelement
5 Badutensil
6 Basisabschnitt
7 Aufnahmenut
8 Kreisbogen
9 Nutöffnung
10 Aussparung
11 Aussparung
12 Ausnehmung
13 Befestigungsschenkel
14 Durchgangsöffnung
15 Wand
16 Fliese
17 Fliesenkleber
18 Fugenmörtel
19 Halteabschnitt
20 Verbindungsabschnitt
21 Steg
22 Kopfabschnitt
23 Kreissehne
24 Schwenkachse
25 Pfeil
26 Pfeil
27 Aufnahmevertiefung
28 Gummilippe
29 Rückseite
30 Hinterschneidung
31 Nut
32 Pfeil
33 Sitzteil
34 Schwenkachse
35
L Längsrichtung
B Nutbreite
b Breite
aₘₐₓ maximaler Abstand
α , β , γ Winkel

## Patentansprüche

1. Profilsystem (1) zum Befestigen von Gegenständen an einer mit einer Plattenbekleidung versehenen Raumwand, umfassend zumindest ein längliches, sich in einer Längsrichtung (L) erstreckendes, einen konstanten Querschnitt aufweisendes Schienenprofil (2) und zumindest ein Steckelement (3), das dazu ausgelegt ist, unmittelbar und lösbar an dem Schienenprofil (2)
steckend befestigt zu werden, wobei das Schienenprofil (2) im Querschnitt betrachtet einen im Wesentlichen rechteckigen Basisabschnitt (6), dessen Tiefe (T) an die Stärke der Plattenbekleidung angepasst ist und der an seiner Vorderseite mit einer sich in Längsrichtung (L) erstreckenden Aufnahmenut (7) mit einer von außen zugänglichen Nutöffnung (9) versehen ist, sowie zumindest einen ersten Befestigungsschenkel (13) aufweist, der sich im Wesentlichen bündig an die Rückseite des Basisabschnitts (6) anschließt und auswärts von dem Basisabschnitt (6) vorsteht, und wobei
das Steckelement (3) einen insbesondere plattenförmig ausgebildeten Halteabschnitt (19) und einen an diesem befestigten, länglich ausgebildeten und sich in Längsrichtung (L) erstreckenden Verbindungsabschnitt (20) aufweist, wobei der Verbindungsabschnitt (20) zumindest einen sich auswärts von dem Halteabschnitt (19) erstreckenden Steg (21) und einen am freien Ende des Stegs (21) angeordneten Kopfabschnitt (22) umfasst, der derart ausgebildet ist, dass er sich in einer ersten Schwenkposition des Steckelementes (3) bezüglich einer sich in Längsrichtung (L) erstreckenden Schwenkachse (24) durch die Nutöffnung (9) in die Aufnahmenut (7) des Schienenprofils (2) einstecken und durch Schwenken des Steckelementes um die Schwenkachse (24) in eine zweite Schwenkstellung innerhalb der Aufnahmenut (7) arretieren lässt,
**dadurch gekennzeichnet, dass** das Profilsystem (1) zumindest ein Lastaufnahmeelement (4) aufweist, das an seiner im Wesentlichen eben ausgebildeten Rückseite (29) mit einer nach unten offenen und nach oben geschlossenen, seitlich Hinterschneidungen (30) aufweisenden Nut (31) versehen, deren Abmessungen derart an den Halteabschnitt (19) des Steckelementes (3) angepasst sind, dass das Lastaufnahmeelement (4) von oben formschlüssig auf den arretierten Halteabschnitt (19) aufschiebbar ist und in diesem Zustand flächig an der Plattenbekleidung anliegt, und an dessen Vorderseite ein Badutensil (5) befestigt ist.

2. Profilsystem (1) nach Anspruch 1, **dadurch gekennzeichnet, dass** die Aufnahmenut (7) im Querschnitt betrachtet einen sich über zumindest 200° erstreckenden Kreisbogen (8) mit einem ersten Radius R1 beschreibt, dass die Nutöffnung (9) eine vorbestimmten Nutbreite (B) besitzt, und dass der Kopfabschnitt (22) eine im Wesentlichen zylindrische Mantelfläche aufweist, die im Querschnitt betrachtet einen Kreisbogen mit dem Radius R2 beschreibt, der gleich dem Radius R1 oder geringfügig kleiner als dieser ist, wobei der maximale Abstand (aₘₐₓ) zwischen einer den Kreisbogen der Mantelfläche begrenzenden Kreissehne (23) und der Mantelfläche geringfügig kleiner als die Nutbreite (B) ist.

3. Profilsystem (1) nach Anspruch 1 oder 2, **dadurch gekennzeichnet, dass** an der Rückseite und/oder an der Oberseite und/oder an der Unterseite des Basisabschnitts (6) des Schienenprofils (2) hinterschnittene Aussparungen (10, 11) vorgesehen sind.

4. Profilsystem (1) nach einem der vorhergehenden Ansprüche, **dadurch gekennzeichnet, dass** im Eckbereich zwischen der Unterseite und der Vorderseite des Basisabschnitts (6) und/oder im Eckbereich zwischen der Vorderseite und der Oberseite des Basisabschnitts (6) und/oder im Eckbereich zwischen der Oberseite und der Rückseite des Basisabschnitts (6) eine bevorzugt mit einem Hinterschnitt versehene Ausnehmung (12) vorgesehen ist, die eine Fugenmörtelkammer definiert.

5. Profilsystem (1) nach einem der vorhergehenden Ansprüche, **dadurch gekennzeichnet, dass** der Befestigungsschenkel (13) mit einer Vielzahl von Durchgangsöffnungen (14) versehen ist, die in Längsrichtung (L) bevorzugt gleichmäßig voneinander beabstandet sind.

6. Profilsystem (1) nach einem der vorhergehenden Ansprüche, **dadurch gekennzeichnet, dass** das zumindest eine Schienenprofil (2) und das zumindest eine Steckelement (3) aus Metall hergestellt sind, insbesondere aus Aluminium oder Edelstahl.

7. Profilsystem (1) nach einem der vorhergehenden Ansprüche, **dadurch gekennzeichnet, dass** der Halteabschnitt (19) plattenförmig ausgebildet ist.

8. Profilsystem (1) nach einem der vorhergehenden Ansprüche, **dadurch gekennzeichnet, dass** der Steg (21) des Verbindungsabschnitts (20) in einem Winkel (β ) im Bereich zwischen 100° und 110° von dem Halteabschnitt (19) vorsteht.

9. Profilsystem (1) nach einem der vorhergehenden Ansprüche, **dadurch gekennzeichnet, dass** der Kopfabschnitt (22) mit einer sich in Längsrichtung (L) erstreckenden Aufnahmevertiefung (27) versehen ist, in welcher eine dem Toleranzausgleich dienende Gummilippe (28) eingesetzt ist.

10. Profilsystem (1) nach einem der vorhergehenden Ansprüche, **dadurch gekennzeichnet, dass** das zumindest eine Lastaufnahmeelement (4) aus Metall oder Kunststoff hergestellt ist.

11. Profilsystem (1) nach einem der vorhergehenden Ansprüche, **dadurch gekennzeichnet, dass** es sich bei dem Badutensil (5) um eine Haltestange, einen Duschsitz, einen Handtuchhalter oder um eine Duschablage handelt.

## Claims

1. Profile system (1) for fastening objects to a room wall provided with a plate covering, comprising at least one elongated rail profile (2), which extends in a longitudinal direction (L) and has a constant cross-section, and at least one plug element (3), which is designed to be fastened directly and detachably to the rail profile (2) in a plug-in manner, wherein
the rail profile (2), viewed in cross-section, has a substantially rectangular base section (6), whose depth (T) is adapted to the thickness of the plate covering and which is provided on its front side with a receiving groove (7) extending in the longitudinal direction (L) with a groove opening (9) accessible from the outside, and at least one fastening leg (13) which adjoins the rear side of the base section (6) substantially flush and projects outwards from the base section (6), and wherein
the plug element (3) has a holding section (19), in particular a plate-shaped holding section (19), and an elongatedly formed connecting section (20) fastened to the holding section (19) and extending in the longitudinal direction (L), the connecting section (20) comprising at least one bar (21) extending outwards from the holding section (19) and a head section (22) arranged at the free end of the bar (21), the head section (22) being designed in such a way, that it can be inserted through the groove opening (9) into the receiving groove (7) of the rail profile (2) in a first swivel position of the plug element (3) with respect to a swivel axis (24) extending in the longitudinal direction (L) and can be locked by swiveling the plug element (3) about the swivel axis (24) into a second swivel position within the receiving groove (7),
**characterized in that** the profile system (1) comprises at least one load-bearing element (4) which, on its substantially flat rear side (29), is provided with a groove (31) which is open at the bottom, closed at the top and has undercuts (30) laterally, the dimensions of the groove (31) being adapted to the holding section (19) of the plug element (3) in such a way that the load-bearing element (4) can be pushed from above onto the locked holding section (19) in a form-fitting manner and, in this state, bears flat against the plate covering, and a bath utensil (5) is fastened to the front side of the load-bearing element (4).

2. Profile system (1) according to claim 1, **characterized in that** the receiving groove (7), viewed in cross-section, describes a circular arc (8) extending over at least 200° and having a first radius R1, **in that** the groove opening (9) has a predetermined groove width (B) and **in that** the head section (22) has a substantially cylindrical circumferential surface, which, viewed in cross-section, describes a circular arc having the radius R2, which is equal to or slightly smaller than the radius R1, the maximum distance (aₘₐₓ) between a circular chord (23) delimiting the circular arc of the circumferential surface and the circumferential surface being slightly smaller than the groove width (B).

3. Profile system (1) according to claim 1 or 2, **characterized in that** undercut recesses (10, 11) are provided on the rear side and/or on the upper side and/or on the underside of the base section (6) of the rail profile (2).

4. Profile system (1) according to any of the preceding claims, **characterized in that** a recess (12), preferably provided with an undercut, is provided in the corner region between the underside and the front side of the base section (6) and/or in the corner region between the front side and the upper side of the base section (6) and/or in the corner region between the upper side and the rear side of the base section (6), the recess defining a grout chamber.

5. Profile system (1) according to any of the preceding claims, **characterized in that** the fastening leg (13) is provided with a plurality of passage openings (14), which are preferably uniformly spaced apart from one another in the longitudinal direction (L).

6. Profile system (1) according to any of the preceding claims, **characterized in that** the at least one rail profile (2) and the at least one plug element (3) are made of metal, in particular of aluminum or stainless steel.

7. Profile system (1) according to any of the preceding claims, **characterized in that** the holding section (19) is plate-shaped.

8. Profile system (1) according to any of the preceding claims, **characterized in that** the bar (21) of the connecting section (20) projects from the holding section (19) at an angle (β) in the range from 100° to 110°.

9. Profile system (1) according to any of the preceding claims, **characterized in that** the head section (22) is provided with a receiving deepening (27) extending in the longitudinal direction (L), into which a rubber lip (28) serving for tolerance compensation is inserted.

10. Profile system (1) according to any of the preceding claims, **characterized in that** the at least one load-bearing element (4) is made of metal or plastic.

11. Profile system (1) according to any of the preceding claims, **characterized in that** the bath utensil (5) is a holding bar, a shower seat, a towel holder or a shower tray.

## Revendications

1. Système de profilés (1) pour la fixation d'objets sur une paroi d'une pièce pourvue d'un revêtement en plaques, comprenant au moins un profilé de rail (2) allongé s'étendant dans une direction longitudinale (L) et présentant une section transversale constante, et au moins un élément d'enfichage (3) qui est conçu pour être fixé directement et de manière amovible par enfichage sur le profilé de rail (2),
le profilé de rail (2), vu en coupe transversale, présentant une section de base (6) sensiblement rectangulaire, dont la profondeur (T) est adaptée à l'-épaisseur du revêtement de panneau et qui est pourvue sur sa face avant d'une rainure de réception (7) s'étendant dans la direction longitudinale (L) avec une ouverture de rainure (9) accessible de l'extérieur, ainsi qu'au moins une première branche de fixation (13) qui se raccorde sensiblement à fleur à la face arrière de la section de base (6) et qui fait saillie vers l'extérieur depuis la section de base (6), et
l'élément d'enfichage (3) présentant une section de maintien (19) réalisée en particulier en forme de plaque et une section de liaison (20) fixée sur celle-ci, réalisée de manière allongée et s'étendant dans la direction longitudinale (L), la section de liaison (20) comprenant au moins une nervure (21) s'étendant vers l'extérieur depuis la section de maintien (19) et une section de tête (22) disposée à l'extrémité libre de la nervure (21), qui est conçue de telle sorte que, dans une première position de pivotement de l'élément d'enfichage (3) par rapport à un axe de pivotement (24) s'étendant dans la direction longitudinale (L), elle peut être insérée à travers l'ouverture de rainure (9) dans la rainure de réception (7) du profilé de rail (2) et peut être bloquée dans une deuxième position de pivotement à l'intérieur de la rainure de réception (7) par pivotement de l'élément d'enfichage autour de l'axe de pivotement (24), **caractérisé en ce que** le système de profilés (1) présente au moins un élément de réception de charge (4) qui est pourvu, sur sa face arrière (29) sensiblement plane, d'une rainure (31) ouverte vers le bas et fermée vers le haut, présentant latéralement des contre-dépouilles (30), dont les dimensions sont adaptées à la section de maintien (19) de l'élément d'enfichage (3) de telle sorte que l'élément de réception de charge (4) peut être enfilé par le haut, par complémentarité de formes, sur la section de maintien (19) bloquée et, dans cet état, s'applique à plat contre le revêtement en plaques, et sur la face avant duquel est fixé un accessoire de bain (5).

2. Système de profilés (1) selon la revendication 1, **caractérisé en ce que** la rainure de réception (7), vue en coupe transversale, décrit un arc de cercle (8) s'étendant sur au moins 200° avec un premier rayon R1, **en ce que** l'ouverture de rainure (9) possède une largeur de rainure (B) prédéterminée, et **en ce que** la section de tête (22) présente une surface d'enveloppe essentiellement cylindrique, qui, vue en coupe, décrit un arc de cercle de rayon R2 égal ou légèrement inférieur au rayon R1, la distance maximale (aₘₐₓ) entre une corde de cercle (23) délimitant l'arc de cercle de la surface d'enveloppe et la surface d'enveloppe étant légèrement inférieure à la largeur de rainure (B).

3. Système de profilés (1) selon la revendication 1 ou 2, **caractérisé en ce que** des évidements (10, 11) en contre-dépouille sont prévus sur la face arrière et/ou sur la face supérieure et/ou sur la face inférieure de la section de base (6) du profilé de rail (2).

4. Système de profilés (1) selon l'une des revendications précédentes, **caractérisé en ce que** dans la zone d'angle entre la face inférieure et la face avant de la section de base (6) et/ou dans la zone d'angle entre la face avant et la face supérieure de la section de base (6) et/ou dans la zone d'angle entre la face supérieure et la face arrière de la section de base (6) est prévu un évidement (12), de préférence pourvu d'une contre-dépouille, qui définit une chambre de mortier de jointoiement.

5. Système de profilés (1) selon l'une des revendications précédentes, **caractérisé en ce que** la branche de fixation (13) est pourvue d'une pluralité d'ouvertures de passage (14), qui sont de préférence régulièrement espacées les unes des autres dans la direction longitudinale (L).

6. Système de profilés (1) selon l'une des revendications précédentes, **caractérisé en ce que** le au moins un profilé de rail (2) et le au moins un élément d'enfichage (3) sont fabriqués en métal, en particulier en aluminium ou en acier inoxydable.

7. Système de profilés (1) selon l'une des revendications précédentes, **caractérisé en ce que** la section de maintien (19) est réalisée en forme de plaque.

8. Système de profilés (1) selon l'une des revendications précédentes, **caractérisé en ce que** l'âme (21) de la section de liaison (20) fait saillie de la section de maintien (19) selon un angle (β) compris entre 100° et 110°.

9. Système de profilé (1) selon l'une des revendications précédentes, **caractérisé en ce que** la partie de tête (22) est pourvue d'une cavité de réception (27) s'étendant dans la direction longitudinale (L), dans laquelle est insérée une lèvre en caoutchouc (28) servant à la compensation des tolérances.

10. Système de profilés (1) selon l'une des revendications précédentes, **caractérisé en ce que** le au moins un élément de réception de charge (4) est fabriqué en métal ou en matière plastique.

11. Système de profilés (1) selon l'une des revendications précédentes, **caractérisé en ce que** l'accessoire de bain (5) est une barre de maintien, un siège de douche, un porte-serviettes ou une tablette de douche.
